Europäisches Patentamt

European Patent Office

Office européen des brevets

(11) Veröffentlichungsnummer: **0 378 047**

**A1**

# (12) EUROPÄISCHE PATENTANMELDUNG

(21) Anmeldenummer: **89810925.1**

(22) Anmeldetag: **07.12.89**

(51) Int. Cl.5: **B29C 49/00, B65D 23/06, B29C 45/26**

(30) Priorität: **07.12.88 CH 4528/88**

(43) Veröffentlichungstag der Anmeldung:
**18.07.90 Patentblatt 90/29**

(84) Benannte Vertragsstaaten:
**AT BE DE ES FR GB IT LU NL SE**

(71) Anmelder: **CLAROPAC AG**
**Schachenstrasse 7**
**CH-8182 Hochfelden(CH)**

(72) Erfinder: **Knechtli, Walter**
**Säntisstrasse 24**
**CH-8123 Ebmatingen(CH)**

(74) Vertreter: **Ryffel, Rolf**
**c/o Hepp Ryffel AG Bahnhofstrasse 58**
**CH-8001 Zürich(CH)**

(54) Verfahren zum Herstellen eines Hohlkörpers mit einem einstückig angeformten Tropfenfänger.

(57) Der Hohlkörper wird durch Spritzblasen, Spritz-streckblasen oder Tauchblasen hergestellt. Dabei wird zunächst durch einen Spritz- oder Pressvorgang ein Vorformling (1) erzeugt, an welchen ein Tropfenfänger direkt angeformt ist. Der Tropfenfänger besteht aus einer Ausgiesstülle (2) und einer diese umgebenden, von einer Umfangswand (3a) begrenzten Sammelrinne. Die Sammelrinne ist mit dem Inneren des Vorformlings (1) - und nach dem Blasen mit dem Inneren des Hohlkörpers - durch eine Rücklauföffnung verbunden. Mit dem Verfahren wird also in einfacher und kostengünstiger Weise ein Hohlkörper mit einem Tropfenfänger der angegebenen Art erhalten.

Fig. 4

EP 0 378 047 A1

## Verfahren zum Herstellen eines Hohlkörpers mit einem einstückig angeformten Tropfenfänger

Die Erfindung bezieht sich auf ein Verfahren zum Herstellen eines Hohlkörpers mit einem einstückig angeformten Tropfenfänger, der eine Ausgiesstülle und eine diese umgebende Sammelrinne aufweist.

Ein Hohlkörper mit einem solchen einstückig angeformten Tropfenfänger ist in der US-A-3 628 697 (Fig. 7) beschrieben. Die Herstellung wird nicht erläutert.

Die US-A-4 640 855 beschreibt ein Verfahren der eingangs angegebenen Art, in welchem zuerst ein Hohlkörper mit zur Bildung der Mündungspartie bestimmten Teilen in einer speziellen gestalt durch ein Blasverfahren erzeugt wird. Anschliessend wird dieser Hohlkörper mit Schneidwerkzeugen bearbeitet, und dann wird die Mündungspartie erneut erhitzt und durch spezielle Werkzeuge in die endgültige Gestalt verformt. Dieses Verfahren ist kompliziert und arbeitsaufwendig.

Die Aufgabe der Erfindung besteht darin, die Herstellung eines mit einem Tropfenfänger versehenen Hohlkörpers durch ein Verfahren der eingangs angegebenen Art zu vereinfachen und zu verbilligen.

Die Aufgabe wird erfindungsgemäss dadurch gelöst, dass der Hohlkörper durch ein Spritzblas-, Spritzstreckblas- oder Tauchblasverfahren erzeugt wird, in welchem der Tropfenfänger mit der Ausgiesstülle und der Sammelrinne durch einen Spritz- oder Pressvorgang direkt an den Hohlkörper angeformt wird.

Das Spritzblasen, das Spritzstreckblasen und das Tauchblasen sind an sich bekannte Hohlkörperblasverfahren, bei welchen die Mündungspartie eines Hohlkörpers durch einen Spritz- oder Pressvorgang geformt werden kann, wie z.B. in der GB-A-2 131 344 beschrieben. Erfindungsgemäss wird nun ein solches Hohlkörperblasverfahren so durchgeführt, dass im Zuge der Herstellung eines Hohlkörpers an diesen ein Tropfenfänger der angegebenen Art angeformt wird, de zweckmässig auch eine die Sammelrinne mit dem Inneren des Hohlkörpers verbindende Rücklauföffnung aufweisen kann. Das Resultat ist dann ein einstückiger Hohlkörper mit Tropfenfänger, bei welchem nach dem Ausgiessen Restflüssigkeit in der Sammelrinne aufgefangen und indas Innere des Hohlkörpers zurückgeführt werden kann. Ein solcher Hohlkörper mit Tropfenfänger wird in nur einem Verfahrensschritt ohne Notwendigkeit von weiteren Manipulationen und Nachbearbeitungen erzeugt.

In einer bevorzugten Ausführungsform des erfindungsgemässen Verfahrens kann an eine die Sammelrinne begrenzende Wand ein Innengewinde angeformt werden, in welches dann eine mit einem Aussengewinde versehene Verschlusskappe geschraubt werden kann. In dieser Weise kann die Sammelrinne auch Restflüssigkeit aufnehmen, die aus der Verschlusskappe zurückläuft, wenn diese als Dosiermass verwendet worden ist.

Die Erfindung bezieht sich auch auf ein Formwerkzeug zum Durchführen des erfindungsgemässen Verfahrens. Das Formwerkzeug besitzt einen in einer Mündungsform angeordneten Spritzdorn, und es ist erfindungsgemäss dadurch gekennzeichnet, dass der Spritzdorn eine Ausnehmung aufweist zum Anformen einer von einer Sammelrinne umgebenen Ausgiesstülle an den Hohlkörper.

Für das Spritzen eines Zylinders der an einem Ende angeformt einen von einer Aussenwand umgebenen Rohrstutzen aufweist, ist aus der US-A-3 402 713 ein Formwerkzeug mit einem in einer Aussenform angeordneten Spritzdorn bekannt, wobei der Spritzdorn zweiteilig ist, und zwischen den beiden Teilen eine Ausnehmung für das Anformen des Rohrstutzens gebildet ist. Dieses Formwerkzeug mit dem zweiteiligen Spritzdorn eignet sich nicht für die erfindungsgemässe Herstellung eines Hohlkörpers, der an seinem der Mündung gegenüberliegenden Ende geschlossen ist, denn es kann nur einer der beiden Spritzdornteile mündungsseitig entformt. werden.

Ausführungsbeispiele der Erfindung werden nachstehend anhand der Zeichnungen näher erläutert. In diesen zeigen in schematischen Darstellungen:

Fig. 1 einen Vorformling im Axialschnitt,

Fig. 2 einen Querschnitt nach der Linie A-A in Fig. 1,

Fig. 3 eine aus dem Vorformling gemäss Fig. 1 hergestellten Hohlkörper mit einer Verschlusskappe, teilweise im Axialschnitt,

Fig. 4 eine Spritzform für den Vorformling gemäss Fig. 1 im Axialschnitt,

Fig. 5 eine Spritzform für einen Vorformling mit Innengewinde und

Fig. 6 Teile einer Spritzform mit einem aus dem Vorformling gemäss Fig. 5 ausgeformten Hohlkörper.

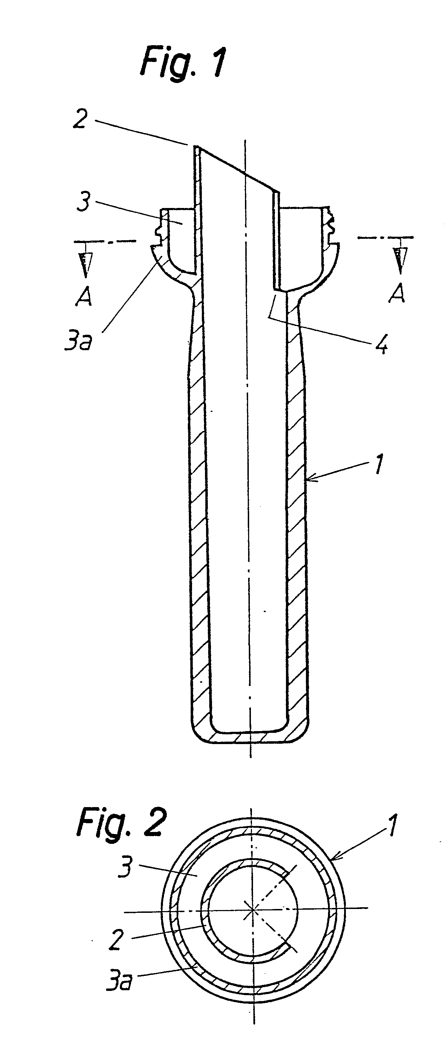

Die Fig. 1 und 2 zeigen einen Vorformling 1 mit einem durch einen Spritz- oder Pressvorgang direkt angeformten Tropfenfänger, welcher aus einer Ausgiesstülle 2, einer die Ausgiesstülle umgebenden, von einer Umfangswand 3a begrenzten Sammelrinne 3 und einer die Sammelrinne mit dem Inneren des Vorformlings 1 verbindungen Rücklauföftnung 4 besteht.

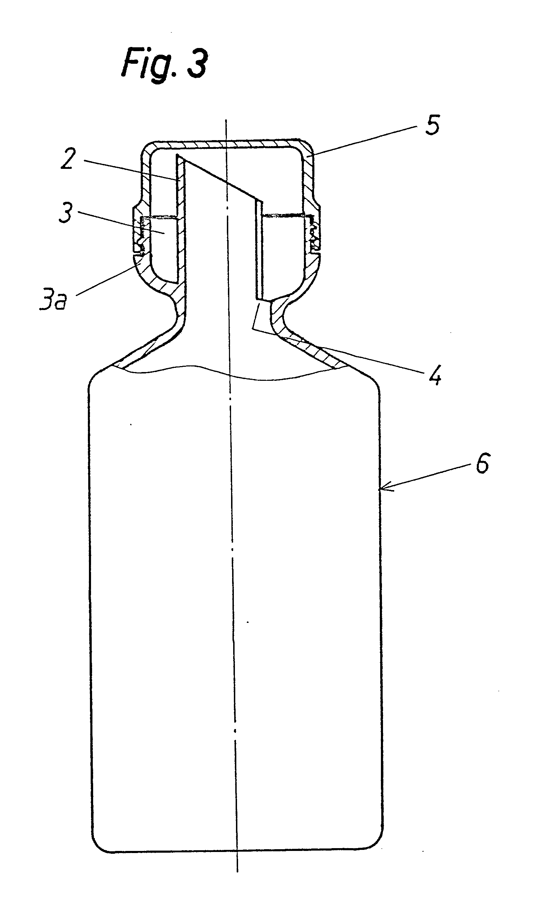

Aus dem Vorformling 1 wird durch Blasen in einer Blasform der in Fig. 3 gezeigte Hohlkörper 6 ausgeformt, der immer noch den angeformten Tropfenfänger mit Sammelrinne 3 und Rücklauföffnung 4 besitzt. Die Fig. 3 zeigt auch eine Verschlusskappe 5, die auf ein Aussengewinde auf der Umfangswand 3a aufgeschraubt ist.

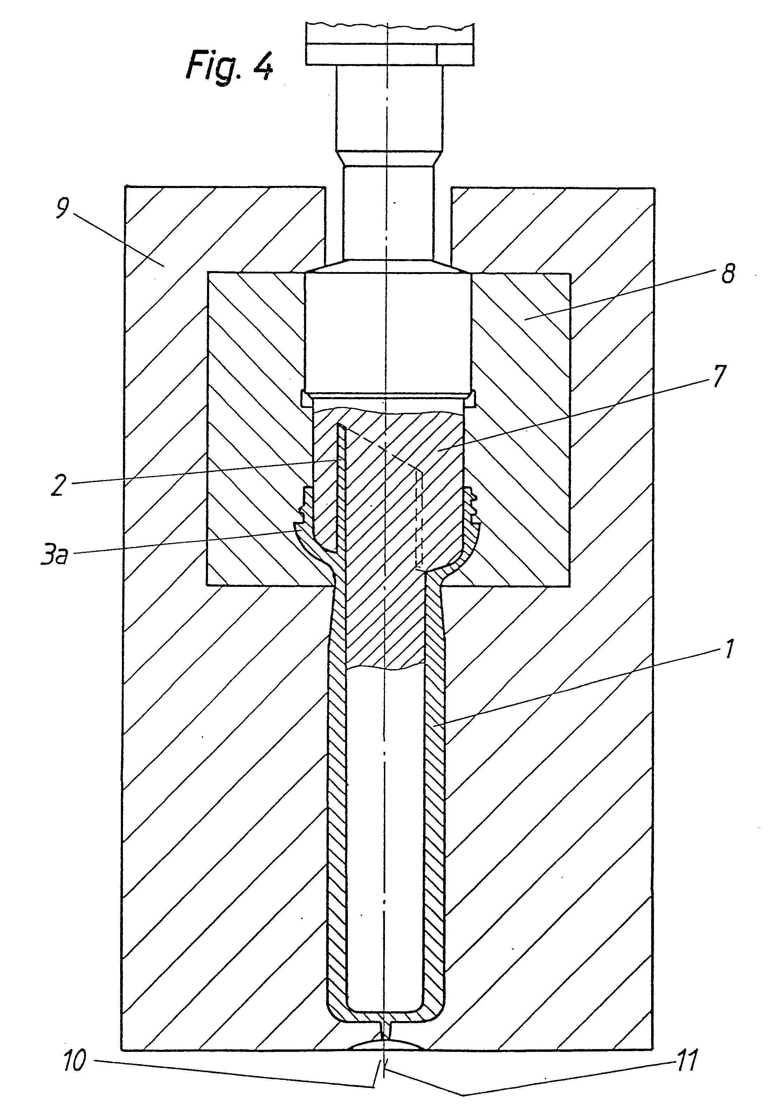

Die Fig 4 zeigt beispielhaft eine Spritzeinheit, in welcher der Vorformling 1 gemäss Fig. 1 und 2 hergestellt wird. Die Spritzeinheit besitzt einen Spritzdorn 7, eine Mündungsform 8 und eine Spritzform 9 mit Einspritzpunkt 10. Die Mündungsform 8 und die Spritzform 9 sind längs einer Trennebene 11 geteilt. Der Spritzdorn 7 besitzt eine Ausnehmung zum Anformen der Ausgiesstülle 2 an den Vorformling 1. Die Umfangswand 3a wird zwischen dem Spritzdorn 7 und der Mündungsform 8 geformt.

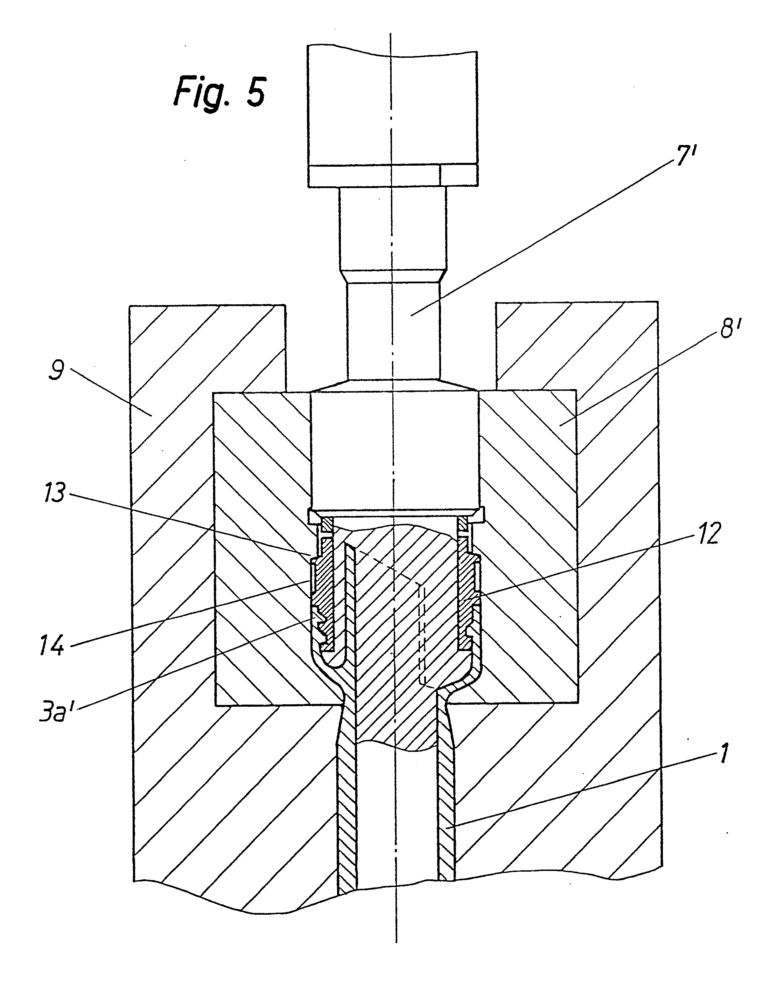

Die Fig. 5 zeigt eine Spritzeinheit, die gegenüber derjenigen von Fig. 4 abgeändert ist, um an die Umfangswand 3a' ein Innengewinde anzuformen. Zu diesem Zweck ist auf dem Spritzdorn 7' ein drehbarer Gewindering 12 mit einem Aussengewinde angeordnet. Mittels eines konischen Absatzes 13 in der Mündungsform 8' wird beim Schliessen der Mündungsform 8' und der Spritzform 9 der Gewindering 12 so axial fixiert, dass keine plastische Masse zwischen den Gewindering 12 und den Spritzdorn 7' gepresst werden kann. Der Gewindering 12 trägt eine Zahnkranz 14, der nach dem Spritzblasen zum Abspindeln des fertigen Hohlkörpers verwendet wird.

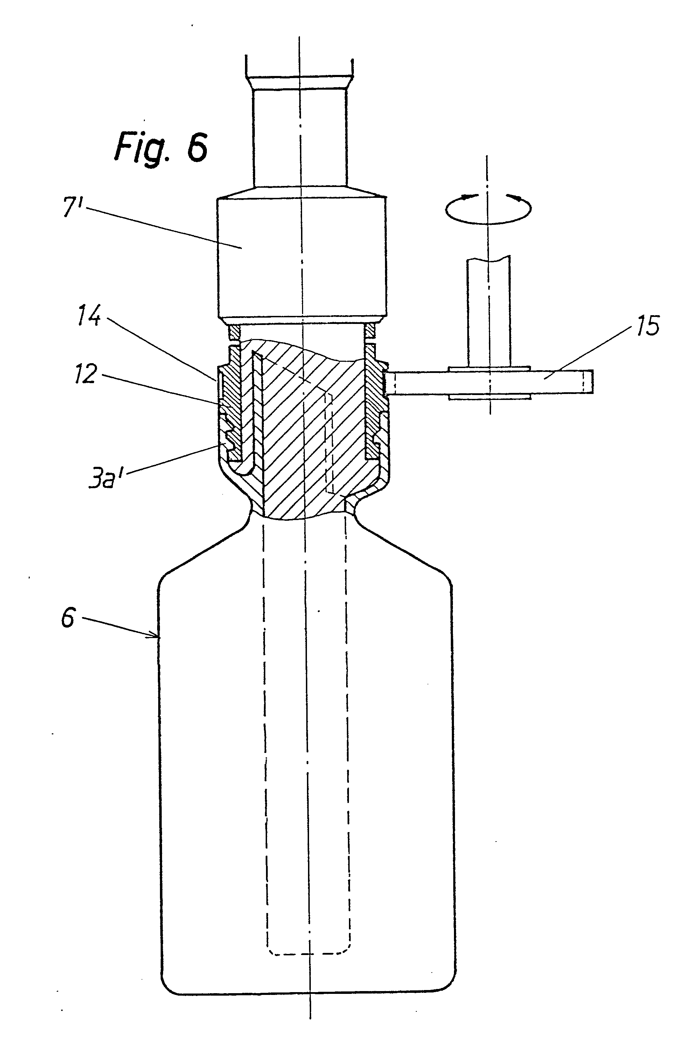

In Fig. 6 ist beispielhaft der Entformungsvorgang eines aus dem Vorformling 1 gemäss Fig. 5 hergestellten Hohlkörpers 6 mit Innengewinde in der Umfangswand 3a' dargestellt. Der Hohlkörper 6 ist in Fig. 6 bereits entformt. Er würde üblicherweise in axialer Richtung vom Spritzdorn 7' gestreift. Wegen des Innengewindes in der Umfangswand 3a' ist das jedoch nicht möglich. Daher ist der Gewindering 12 drehbar auf dem Spritzdorn 7' angebracht. Zum Abnehmen des Hohlkörpers 6 vom Spritzdorn 7' greift ein drehbares Abspindelrad 15 in den Zahnkranz 14 am Gewindering 12 ein und gibt den Hohkörper 6 durch eine auf den Gewindering 12 übertragene Drehbewegung frei, so dass anschliessend ein axiales Abstreifen in bekannter Art vollzogen werden kann.

## Ansprüche

1. Verfahren zum Herstellen eines Hohlkörpers mit einem einstückig angeformten Tropfenfänger, der eine Ausgiesstülle (2) und eine diese umgebende Sammelrinne (3) aufweist, dadurch gekennzeichnet, dass der Hohlkörper (6) durch ein Spritzblas-, Spritzstreckblas- oder Tauchblasverfahren erzeugt wird, in welchem der Tropfenfänger mit der Ausgiesstülle (2) und der Sammelrinne (3) durch einen Spritz- oder Pressvorgang direkt an den Hohlkörper (6) angeformt wird.

2. Verfahren nach Anspruch 1, dadurch gekennzeichnet, dass der Tropfenfänger auch eine die Sammelrinne (3) mit dem Inneren des Hohlkörpers (6) verbindende Rücklauföffnung (4) aufweist.

3. Verfahren nach Anspruch 1 oder 2, dadurch gekennzeichnet, dass der Tropfenfänger durch einen Spritz- oder Pressvorgang bei der Erzeugung eines Vorformlings (1) an diesen angeformt wird.

4. Formwerkzeug zum Durchführen des Verfahrens nach einem der Ansprüche 1 bis 3, mit einem in einer Mündungsform (8; 8') angeordneten Spritzdorn (7; 7'), dadurch gekennzeichnet, dass der Spritzdorn (7; 7') eine Ausnehmung aufweist zum Anformen einer von einer Sammelrinne (3) umgebenen Ausgiesstülle (2) an den Hohlkörper (6).

5. Formwerkzeug nach Anspruch 4, dadurch gekennzeichnet, dass die Ausnehmung im Spritzdorn (7; 7') so gestaltet ist, dass beim Anformen der Ausgiesstülle (2) eine die Sammelrinne (3) mit dem Inneren des Hohlkörpers (6) verbindende Rücklauföffnung (4) entsteht.

6. Formwerkzeug nach Anspruch 4 oder 5, dadurch gekennzeichnet, dass auf dem Spritzdorn (7') ein Gewindering (12) mit einem Aussengewinde angeordnet ist zum Anformen eines Innengewindes an eine die Sammelrinne (3) begrenzende Wand (3a').

7. Formwerkzeug nach Anspruch 6, dadurch gekennzeichnet, dass der Gewindering (12) drehbar auf dem Spritzdorn (7') angeordnet ist und vorzugsweise einen Zahnkranz (14) trägt.

8. Formwerkzeug nach Anspruch 7, gekennzeichnet durch ein mit dem Gewindering (12) in Eingriff bringbares Antriebsrad (15).

## Fig. 1

2

3

A

3a

4

A

1

## Fig. 2

1

3

2

3a

# Fig. 3

*Fig. 4*

*Fig. 5*

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | US-A-4 640 855 (D.L. St. CLAIR) <br> * Insgesamt * <br> --- | 1 | B 29 C 49/00 <br> B 65 D 23/06 <br> B 29 C 45/26 |
| Y,D | US-A-3 628 697 (L.G. DOWSON) <br> * Spalte 2, Zeilen 29-36; Figur 7 * <br> --- | 1-8 | |
| Y,D | GB-A-2 131 344 (METALBOX) <br> * Seite 1, Zeile 3 - Seite 2, Zeile 11; Seite 2, Zeilen 84-95; Figuren * <br> --- | 1-4 | |
| Y,D | US-A-3 402 713 (T.S. SENKOWSKI et al.) <br> * Figuren 7-9 * <br> ----- | 5-8 | |

RECHERCHIERTE
SACHGEBIETE (Int. Cl.5)

B 29 C
B 65 D

Der vorliegende Recherchenbericht wurde für alle Patentansprüche erstellt

| Recherchenort | Abschlußdatum der Recherche | Prüfer |
|---|---|---|
| DEN HAAG | 20-03-1990 | SZAMOCKI G.J.A. |